(19)

Europäisches Patentamt

European Patent Office

Office européen des brevets

(11) **EP 4 360 837 A1**

(12) **EUROPEAN PATENT APPLICATION**

(43) Date of publication:
**01.05.2024 Bulletin 2024/18**

(21) Application number: **22204700.3**

(22) Date of filing: **31.10.2022**

(51) International Patent Classification (IPC):
**B28B 3/02** *(2006.01)*     **B28B 3/08** *(2006.01)*
**C04B 35/645** *(2006.01)*     **B28B 11/24** *(2006.01)*
**B30B 11/04** *(2006.01)*     **B30B 15/34** *(2006.01)*
**B22F 3/105** *(2006.01)*

(52) Cooperative Patent Classification (CPC):
**B28B 3/025; B28B 3/086; B28B 11/243;**
**B30B 11/04; B30B 15/34; C04B 35/119;**
**C04B 35/44; C04B 35/645;** C04B 2235/3225;
C04B 2235/666; C04B 2235/764; C04B 2235/77;
C04B 2235/782; C04B 2235/786; C04B 2235/80;

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Heraeus Conamic North America LLC**
**Chandler, AZ 85226 (US)**

(72) Inventors:
• **Donelon, Matthew J.**
  **Chandler, AZ 85226 (US)**
• **Walker, Luke**
  **Chandler, AZ 85226 (US)**

(74) Representative: **Gille Hrabal**
**Partnerschaftsgesellschaft mbB**
**Patentanwälte**
**Brucknerstraße 20**
**40593 Düsseldorf (DE)**

(54) **A SINTERING DEVICE HAVING A DIE LINING OF INCREASED THICKNESS**

(57)     The invention relates in general to sintering under pressure and with electrical current, often termed spark plasma sintering (SPS). Particular aspects of the invention are directed to a sintering device, a sintering process, a ceramic body product, an assembly comprising the ceramic body and the use of a graphite layer in a sintering process.

The invention relates to a device having a sintering chamber (013), the sintering chamber being bordered by the following device parts:
i. a first punch surface (004) of a first punch (003);
ii. a second punch surface (007) of a second punch (008); and
iii. an interior surface (005) of a die (006);
wherein:
the punches are adapted and arranged to apply a pressure of at least 1 MPa along a compression axis (011) to a target in the sintering chamber;
the first punch and the second punch are connected to an electrical power source (012) adapted and arranged to provide a current of at least 5 kA;
the first and second punches comprise at least 50 wt. % carbon, based on the total weight of the punch;
the sintering chamber has a cross-sectional width W perpendicular to the compression axis of at least 300 mm;
wherein a layer $\delta$ of a carbon material $C_\delta$ is present at at least part of the interior surface of the die, the layer $\delta$ having a mean thickness $D_\delta$ determined over the interior surface of the die,
wherein $D_\delta$ is in the range from 1.1 to 8 mm.

Figure 2

**(Cont. next page)**

(52) Cooperative Patent Classification (CPC): (Cont.)
C04B 2235/95

**Description**

**Field of the Invention**

The invention relates in general to sintering under pressure and with electrical current, often termed spark plasma sintering (SPS). Particular aspects of the invention are directed to a sintering device, a sintering process, a ceramic body product, an assembly comprising the ceramic body and the use of a graphite layer in a sintering process.

**Background**

Sintering methods provide a route to forming bodies from particles through application of heat and pressure. In one method, often referred to as Spark Plasma Sintering (SPS), heating is achieved using an electric current. The spark plasma sintering method in the state of the art has been applied to various materials. Existing literature focuses on small-scale systems, providing access to parts having physical extensions of up to around 150 mm. The question of preparing larger parts using SPS is assessed from a theoretical standpoint by Eugene A. Olevsky et al. in "Fundamental Aspects of Spark Plasma Sintering: I. Experimental Analysis of Scalability" (J. Am. Ceram. Soc., 95 [8], 2406 to 2413 (2012)) and "Fundamental Aspects of Spark Plasma Sintering: II. Experimental Analysis of Scalability" (J. Am. Ceram. Soc., 95 [8], 2414 to 2422 (2012)). A number of potential challenges and complications in relation to large-scale systems were identified.

**Summary of the Invention**

It is an object of this invention to provide an improved process for preparing a ceramic body. It is a particular object of this invention to an improved process for preparing ceramic bodies of increased size.

It is an object of this invention to provide an improved process for preparing a ceramic body having reduced energy requirements.

It is an object of this invention to provide an improved process for preparing a ceramic body having a reduced rejection rate.

It is an object of this invention to provide an improved process for preparing a ceramic body having reduced susceptibility to fracturing.

It is an object of this invention to provide an improved process for preparing a ceramic body having reduced internal stress.

It is an object of this invention to provide an improved process for preparing a ceramic body having increased mechanical strength.

It is an object of this invention to provide an improved process for preparing a ceramic body having increased density.

It is an object of this invention to provide an improved process for preparing a ceramic body having increased homogeneity of density.

It is an object of this invention to provide an improved process for preparing a ceramic body having increased etch resistance.

It is an object of this invention to provide an improved process for preparing a ceramic body having reduced surface roughness.

It is an object of this invention to provide a device for performing the aforementioned improved processes.

A contribution to at least partially fulfilling at least one of the above-mentioned objects is made by any of the embodiments of the invention.

A first embodiment of the invention is a device having a sintering chamber, the sintering chamber being bordered by the following device parts:

   i. a first punch surface of a first punch;
   ii. a second punch surface of a second punch; and
   iii. an interior surface of a die;

wherein:

   the punches are adapted and arranged to apply a pressure of at least 1 MPa along a compression axis to a target in the sintering chamber, preferably at least 5 MPa, more preferably at least 10 MPa, most preferably at least 15 MPa. The punches may be adapted and arranged to apply up to 80 MPa, or even more;
   the first punch and the second punch are connected to an electrical power source adapted and arranged to provide a current of at least 5 kA, preferably at least 10 kA, more preferably at least 50 kA, most preferably at least 60 kA. The electrical power source might be adapted and arranged to provide a current of up to 100 kA, or even more; the first and second punches comprise at least 50 wt. % carbon, based on the total weight of the punch, preferably at least 90 wt. %, more preferably at least 95 wt. %, most preferably at least 99 wt. %; the sintering chamber has a cross-sectional width W perpendicular to the compression axis of at least 300 mm, preferably at least 500 mm, more preferably at least 700 mm. W might reach as high as 2000 mm or more. Preferably it is not more than 1500 mm, more preferably not more than 900 mm;

wherein a layer $\delta$ of a carbon material $C_\delta$ is present at at least part of the interior surface of the die, the layer $\delta$ having a mean thickness $D_\delta$ determined over the interior surface of the die, wherein $D_\delta$ is in the range from 1.1 to 8 mm, preferably in the range from 1.3 to 4 mm, more preferably in the range from 1.5 to 3 mm, and further preferably in the range from 1.9 to 2.5 mm.

In a preferred embodiment of the device, the width W is at least 500 mm and the thickness $D_\delta$ is at least 1.5 mm, preferably at least 1.8 mm, more preferably at least 1.93 mm. This preferred embodiment is a second embodiment of the invention, that preferably depends on the first embodiment of the invention.

In another preferred embodiment of the device, the width W is less than 500 mm and the thickness $D_\delta$ is at most 1.8 mm, preferably at most 1.6 mm, more preferably at most 1.3 mm. This preferred embodiment is a third embodiment of the invention, that preferably depends on the first or second embodiment of the invention.

In a preferred embodiment of the device, the layer $\delta$ has a standard deviation of thickness $D_\delta$ in the range from 0.01 to 0.08 mm determined over the interior surface of the die, preferably in the range from 0.02 to 0.06 mm, more preferably in the range from 0.03 to 0.05 mm. This preferred embodiment is a fourth embodiment of the invention, that preferably depends on any of the first to third embodiments of the invention.

In a preferred embodiment of the device, the layer $\delta$ is made up of 2 or more stacked sub-layers, preferably from 2 to 10, or 2 to 8 or 2 to 6. This preferred embodiment is a fifth embodiment of the invention, that preferably depends on any of the first to fourth embodiments of the invention.

In a preferred embodiment of the device, the chamber has a diameter Dc and the ratio $D_C:D_\delta$ of the diameter Dc and the mean thickness of the layer $D_\delta$ is in the range from 100:1 to 250:1, preferably in the range from 120:1 to 230:1, more preferably in the range from 130:1 to 210:1. This preferred embodiment is a sixth embodiment of the invention, that preferably depends on any of the first to fifth embodiments of the invention.

In a preferred embodiment of the device, both punches (003, 008) and the die are at least partially present in a vacuum chamber or in a non-oxidising atmosphere or both. This preferred embodiment is a seventh embodiment of the invention, that preferably depends on any of the first to sixth embodiments of the invention.

In a preferred embodiment of the device, the electrical power source is adapted and arranged to supply DC voltage. This preferred embodiment is an eighth embodiment of the invention, that preferably depends on any of the first to seventh embodiments of the invention.

In a preferred embodiment of the device, one or both of the following are satisfied:

a. a layer $\varepsilon$ of a carbon material $C_\varepsilon$ is present at at least part of the first punch surface, preferably having a mean thickness in the range from 1.1 to 8 mm;
b. a layer $\theta$ of a carbon material $C_\theta$ is present at at least part of the second punch surface, preferably having a mean thickness in the range from 1.1 to 8 mm.

This preferred embodiment is a ninth embodiment of the invention, that preferably depends on any of the first to eighth embodiments of the invention. In an aspect of the ninth embodiment, all possible combination of the features a. and b. are preferred aspects of the embodiment. These combinations are *e.g.,* a; b; a+b.

In a preferred embodiment of the device, one or more of the following are satisfied:

a. The first punch is at least 99% wt. % carbon, based on the total weight of carbon atoms in any chemical form and the total weight of the first punch;
b. the second punch is at least 99% wt. % carbon, based on the total weight of carbon atoms in any chemical form and the total weight of the second punch;
c. The die is at least 99% wt. % carbon, based on the total weight of carbon atoms in any chemical form and the total weight of the die;
d. The layer $\delta$ is at least 99% wt. % carbon, based on the total weight of carbon atoms in any chemical form and the total weight of the layer $\delta$.

This preferred embodiment is a tenth embodiment of the invention, that preferably depends on any of the first to ninth embodiments of the invention. In an aspect of the tenth embodiment, all possible combination of the features a. to d. are preferred aspects of the embodiment. These combinations are *e.g.,* a; b; c; d; a+b; a+c; a+d; b+c; b+d; c+d; a+b+c; a+b+d; a+c+d; b+c+d; a+b+c+d.

In a preferred embodiment of the device, the die is of a carbon material $C_\gamma$ and one or more of the following are satisfied:

a. $C_\delta$ and $C_\gamma$ have a different anisotropy value,
b. $C_\delta$ and $C_\gamma$ have a different specific conductivity, determined in a direction parallel to the compression axis,
c. $C_\delta$ and $C_\gamma$ have a different specific conductivity, determined in a direction perpendicular to the interior surface,
d. $C_\delta$ and $C_\gamma$ have a different specific thermal expansivity, determined in a direction parallel to the compression axis,
e. $C_\delta$ and $C_\gamma$ have a different specific thermal expansivity, determined in a direction perpendicular to the interior surface,
f. The first carbon material and the second carbon material have a different ash content as determined by ASTM C-561.

This preferred embodiment is an eleventh embodiment of the invention, that preferably depends on any of the first to tenth embodiments of the invention. In an aspect of the eleventh embodiment, all possible combination of the features a. to f. are preferred aspects of the embodiment. These combinations are *e.g.,* a; b; c; d; e; f; a+b; a+c; a+d; a+e; a+f; b+c; b+d; b+e; b+f; c+d; c+e; c+f; d+e; d+f; e+f; a+b+c; a+b+d; a+b+e; a+b+f; a+c+d; a+c+e; a+c+f; a+d+e; a+d+f; a+e+f; b+c+d; b+c+e; b+c+f; b+d+e; b+d+f; b+e+f; c+d+e; c+d+f; c+e+f; d+e+f; a+b+c+d; a+b+c+e; a+b+c+f; a+b+d+e; a+b+d+f; a+b+e+f; a+c+d+e; a+c+d+f; a+c+e+f; a+d+e+f; b+c+d+e; b+c+d+f; b+c+e+f; b+d+e+f; c+d+e+f; a+b+c+d+e; a+b+c+d+f; a+b+c+e+f; a+b+d+e+f; a+c+d+e+f; b+c+d+e+f; a+b+c+d+e+f.

A twelfth embodiment of the invention is a process for the preparation of a ceramic body, comprising the steps:

a. providing a plurality of particles;
b. providing a device according to the invention;
c. introducing the particles into the sintering chamber of the device;
d. applying a pressure P in the range from 1MPa to 80 MPa and an electrical current I in the range from 1 kA to 100 kA, preferably in the range from 5 kA to 100 kA, more preferably in the range from 10 kA to 100 kA, even more preferably in the range from 50 kA to 100 kA, and further preferably in the range from 60 kA to 100 kA, to obtain the ceramic body.

The device provided in this twelfth embodiment is preferably a device according to any of the first to eleventh embodiments of the invention.

In a preferred embodiment of the process, the particles contain at least 30 wt. % yttrium in any chemical form, based on the total mass of yttrium atoms and the total mass of the particles, preferably at least 40 wt. %, more preferably at least 45 wt. %. This preferred embodiment is a thirteenth embodiment of the invention, that preferably depends on the twelfth embodiment of the invention.

In a preferred embodiment of the process, the value of the mean thickness $D_\delta$ following step d. divided by the thickness $D_\delta$ preceding step a. is preferably at least 0.8, more preferably at least 0.9, more preferably at least 0.95. This preferred embodiment is a fourteenth embodiment of the invention, that preferably depends on the twelfth or thirteenth embodiment of the invention.

A fifteenth embodiment of the invention is a ceramic body obtainable by a process according to the invention. The process is preferably according to any of the twelfth to fourteenth embodiments.

In a preferred embodiment of the ceramic body, at least one or all of the following are satisfied for the ceramic body:

a. A value for density divided by theoretical density that is less than 1.0;
b. An average grain size of less than 5 $\mu$m, preferably less than 4.5 $\mu$m, more preferably less than 4 $\mu$m, and further preferably from 1 $\mu$m to 3 $\mu$m;
c. A standard deviation for the average grain size distribution that is in the range of 1.2 $\pm$ 2 $\mu$m to 2.8 $\pm$ 2 $\mu$m, preferably in the range of 1.6 $\pm$ 2 $\mu$m to 2.4 $\pm$ 2 $\mu$m, and more preferably in the range of 1.8 $\pm$ 2 $\mu$m to 2.2 $\pm$ 2 $\mu$m.

This preferred embodiment is a sixteenth embodiment of the invention, that preferably depends on the fifteenth embodiment of the invention. In an aspect of the sixteenth embodiment, all possible combination of the features a. to c. are preferred aspects of the embodiment. These combinations are *e.g.,* a; b; c; a+b; a+c; b+c; a+b+c. In an aspect of the sixteenth embodiment, feature a., the value for density divided by theoretical density is preferably at least 0.9, more preferably at least 0.95, and further preferably at least 0.99.

A seventeenth embodiment of the invention is an assembly comprising a ceramic body according to the invention, preferably according to either of the fifteenth or sixteenth embodiments.

In a preferred embodiment of the assembly, the assembly is selected from the group consisting of:

a. A plasma etcher,
b. Plasma processing chamber (etch or deposition processes),
c. A wear plate for a bearing,
d. A mill liner of a grinding mill.

This preferred embodiment is an eighteenth embodiment of the invention, that preferably depends on the seventeenth embodiment of the invention.

A nineteenth embodiment of the invention is a use of a graphite layer of thickness in the range from 1.1 to 8 mm, preferably in the range from 1.3 to 4 mm, more preferably in the range from 1.5 to 3 mm, and further preferably in the range from 1.8 to 2.5 mm, for preparing a ceramic body having an extension of at least 300 mm by spark plasma sintering.

## Detailed Description

### Sintering

The invention is directed to a sintering process. A preferred sintering process produces a body from particles through application of pressure and heat. It is preferred for heating to be through application of an electric current.

A preferred sintering increases the density of the plurality of particles to produce the body. The body preferably has a higher density than the plurality of particles.

A preferred sintering produces a product body having a density at least 95%, preferably at least 99%, more preferably at least 99.9% of its theoretical density.

### Device

The device of the invention is adapted and arranged for sintering particles to produce a body. The device comprises at least a first punch, a second punch and a die. The device has a sintering chamber.

### Sintering chamber

The device of the invention has a sintering chamber. The sintering chamber is preferably adapted and arranged for accommodating a plurality of particles. The sintering chamber is preferably bordered by a first punch surface of a first punch, a second punch surface of a second punch and an interior surface of a die. The sintering chamber may be bordered by the first punch surface, the second punch surface and the interior surface only, or may additionally by bordered by one or more further surfaces. The sintering chamber is preferably bordered by the first punch surface, the second punch surface and the interior surface only.

The sintering chamber may have one or more symmetry planes or one or more axes of symmetry or both. The sintering chamber may have the form of a volume of revolution. The sintering chamber may be cylindrical.

### Punches

The device of the invention has a first punch and a second punch. The first punch has a first punch surface, which borders the sintering chamber. The second punch has a second punch surface, which borders the sintering chamber. It is preferred for one or both of the punch surfaces to be substantially flat.

The punches are preferably adapted and arranged for applying a force to a target within the sintering chamber, preferably for producing an elevated pressure in the sintering chamber. The punches are preferably adapted and arranged for producing a pressure of at least 1 MPa in the sintering chamber, preferably at least 5 MPa, more preferably at least 10 MPa, most preferably at least 15 MPa. The punches may be adapted and arrange to apply up to 80 MPa, or even more.

The first and second punches are preferably positioned vertically above and below the sintering chamber respectively. The first and second punches are preferably adapted and arranged to move along a compression axis.

The punches are preferably conductive. The punches are preferably adapted and arranged to provide a current of at least 5 kA across the sintering chamber, preferably at least 10 kA, more preferably at least 50 kA, most preferably at least 60 kA. The electrical power source might be adapted and arranged to provide a current of up to 100 kA, or even more.

The punches are preferably of a carbon material, most preferably of graphite. The punches preferably comprise at least 95 wt. % carbon, more preferably at least 99 wt. %, more preferably still at least 99.5 wt. % carbon. The punches may comprise one or more selected from: a layer and a region; of a material other than carbon.

**Die**

The device of the invention has a die. The die has an interior surface bordering the sintering chamber.

In one embodiment, the die is electrically conductive. It is preferred for the die to have an anisotropic electrical conductivity, preferably having a material orientation axis substantially aligned with the compression axis.

In one embodiment, the die comprises one or more elements selected from group 14 of the periodic table. Group 14 elements are sometimes also referred to as group IVA elements or group 4A elements. The die preferably comprises one or more selected from the group consisting of: C, Si, Ge, Sn & Pb, preferably selected from C, Si, Ge and Sn, most preferably selected from C & Si. C is the most preferred group 14 element. In one aspect of this embodiment, the die contains 50 wt % or more, based on the total weight of the die, of group 14 elements, more preferably 90 wt % or more, most preferably 95 wt % or more.

In one embodiment, the die contains at least 50 wt % C, based on the total weight of the die, preferably 90 wt. % or more, more preferably 95 wt. % or more, most preferably 99 wt. % or more. In one aspect of this embodiment, the die additionally comprises one or more further group 14 elements, preferably selected from Si, Ge, Sn & Pb, more preferably selected from Si, Ge & Sn, more preferably still selected from Si & Ge, most preferably Si. Further group 14 elements are preferably present with a total content of at least 0.1 wt. %, more preferably at least 1 wt. %, most preferably at least 2 wt. %. Elements other than C, Si, Ge, Sn & Pb in this embodiment are preferably present with a total content of not more than 1 wt. %, more preferably not more than 0.5 wt. %, most preferably not more than 0.1 wt. %.

The die may be a single piece or multiple pieces, preferably a single piece. It is preferred that the die is a single contiguous body, more preferably a single cylindrical body. The die is preferably present as 2 to 10 pieces, more preferably 2 to 5 pieces, more preferably still 2 to 3 pieces, most preferably 2 pieces.

The die may have one or more symmetry planes or one or more axes of symmetry or both. The sintering chamber may have the form of a volume of revolution. The sintering chamber may be hollow cylindrical.

The die is preferably of a carbon material, most preferably of graphite.

**Orientation**

The device of the invention has a compression axis. The device is preferably adapted and arranged to apply force to the sintering chamber along the direction of the compression axis.

It is preferred for the first punch to be movable along the compression axis. It is preferred for the second punch to be movable along the compression axis. It is preferred for both punches to be movable along the compression axis.

In one embodiment, the compression axis is substantially vertical, preferably with the first punch positioned above the second punch. In an aspect of this embodiment, the first punch surface is preferably a lower surface of the first punch. In another aspect of this embodiment, the first punch surface is substantially horizontal. In another aspect of this embodiment, the second punch surface is preferably an upper surface of the second punch. In another aspect of this embodiment, the second punch surface is substantially horizontal.

The sintering chamber is preferably adapted and arranged for accommodating a plurality of particles.

**Layer**

In the device of the invention, a layer of a carbon material is present at at least a part of the interior surface of the die.

In one embodiment, the layer is present at 20% or more of the interior surface of the die, based on the total area of the interior surface of the die, preferably 50% or more, more preferably 90% or more, most preferably 95% or more. It is most preferable for the layer to be present at substantially the whole interior surface of the die.

In one embodiment, the layer lines the interior surface of the die, preferably lines substantially the entire surface of the die.

In one embodiment, a first gap is present between the interior surface of the die and the first punch and the layer is present in at least part of the gap, preferably substantially all of the gap. In one embodiment, a second gap is present between the interior surface of the die and the second punch and the layer is present in at least part of the gap, preferably substantially all of the gap.

In one embodiment, the device comprises a further layer.

The layer may be a single layer, or may have at least two stacked sub-layers. The layer preferably has at least two stacked sub-layers, preferably between from 2 to 20 stacked sub-layers. The layer, or any sub-layer can be present over part of the internal perimeter of the die, or over substantially the entire internal perimeter of the die, or over the entire internal perimeter of the die as well as overlapping itself at least partially.

The layer is preferably close to the interior surface of the die, more preferably in physical contact with the interior surface of the die. The layer may be a piece which is not integrally connected to the interior surface of the die. This can be the case in particular prior to the sintering process. The layer may be integrally connected to the interior surface of the die. This can be the case in particular following the sintering process.

The thickness of the layer is determined as a mean over the entire interior surface of the die. The layer may be a graphite foil. A graphite foil preferably has a plurality of 2D platelets. A graphite foil is preferably arranged to form a roll.

The layer preferably has an ash content of less than 1 wt. %, more preferably less than 0.5 wt. %, more preferably still less than 0.4 wt. %.

**Product**

The product of the invention is a ceramic body. The ceramic body preferably has a higher density than the plurality of particles. A preferred body is a contiguous object. A preferred body has a value of density divided by theoretical density of at least 0.9, preferably at least 0.95, more preferably at least 0.99.

A preferred ceramic is an inorganic material. A preferred ceramic is non-metallic. Some preferred ceramics are oxides, nitrides, carbides, or combinations thereof. A preferred ceramic is a refractory material.

A preferred oxide ceramic may be the oxide of a single element, or a mixed oxide of more than one element. An oxide ceramic may comprise some nitride or carbide content or both. An oxide ceramic may be free of nitride or free of carbide or free of both. A preferred ceramic oxide may be stoichiometric or non-stoichiometric. A stoichiometric oxide preferably has whole number ratios between the number of atoms of its constituent elements. An oxide ceramic may contain two or more groupings of elements, each element being in a stoichiometric ratio to each other elements of its own grouping, but in a non-stoichiometric ratio to each member of other groupings.

A preferred nitride ceramic may be the nitride of a single element, or a mixed nitride of more than one element. A nitride ceramic may comprise some oxide or carbide content or both. A nitride ceramic may be free of oxide or free of carbide or free of both. A preferred ceramic nitride may be stoichiometric or non-stoichiometric. A stoichiometric nitride preferably has whole number ratios between the number of atoms of its constituent elements. A nitride ceramic may contain two or more groupings of elements, each element being in a stoichiometric ratio to each other elements of its own grouping, but in a non-stoichiometric ratio to each member of other groupings.

A preferred carbide ceramic may be the carbide of a single element, or a mixed carbide of more than one element. A carbide ceramic may comprise some oxide or nitride content or both. A carbide ceramic may be free of oxide or free of nitride or free of both. A preferred ceramic carbide may be stoichiometric or non-stoichiometric. A stoichiometric carbide preferably has whole number ratios between the number of atoms of its constituent elements. A carbide ceramic may contain two or more groupings of elements, each element being in a stoichiometric ratio to each other elements of its own grouping, but in a non-stoichiometric ratio to each member of other groupings.

A preferred constituent element of the ceramic is yttrium. The ceramic may contain at least 20 wt. % yttrium atoms, based on the total weight of the ceramic, preferably at least 30 wt. %, more preferably at least 40 wt. %, most preferably at least 45 wt. %. The content of yttrium might be as high as 50 wt. %, or even more. A preferred yttrium containing ceramic comprises oxide. A preferred yttrium containing ceramic is an oxide ceramic, preferably a mixed oxide ceramic, comprising atoms of one or more elements distinct from yttrium and oxygen. A mixed oxide ceramic is often quantified in terms the content of simple oxides which would be required to prepare it. A preferred yttrium containing mixed oxide ceramic comprises at least 20 wt. % yttrium oxide, based on the total weight of the ceramic, preferably at least 30 wt. %, more preferably at least 40 wt. %, most preferably at least 45 wt. %. The content of yttrium oxide might be as high as 50 wt. %, or even more.

Further to oxygen, nitrogen and carbon, some preferred elements present in the ceramic are one or more selected form the list consisting of yttrium, zirconium, aluminium, titanium, silicon, boron, phosphorus and beryllium. These elements could be constituents of oxides, nitrides, carbides or combinations thereof.

Oxygen-containing ceramics are often quantified in terms the content of simple oxides which would be required to prepare them. Some preferred oxide constituents are, silica, boria, beryllium oxide, yttrium oxide, aluminum oxide, zirconium oxide, titanium oxide, silicon dioxide, quartz, calcium oxide, cerium oxide, nickel oxide, copper oxide, strontium oxide, scandium oxide, samarium oxide, hafnium oxide, vanadium oxide, niobium oxide, tungsten oxide, manganese oxide, tantalum oxide, terbium oxide, europium oxide, neodymium oxide, yttrium aluminate oxide, zirconium aluminate oxide, lanthanum oxide, lutetium oxide and erbium oxide. Some preferred mixed oxides are one or more selected from the group consisting of: zirconium silicate oxide, hafnium aluminate oxide, hafnium silicate oxide, titanium silicate oxide, lanthanum silicate oxide, lanthanum aluminate oxide (LAO), yttrium silicate oxide, titanium silicate oxide, tantalum silicate oxide, oxynitride, barium titanate, lead titanate and lead zirconate titanate.

Nitrogen-containing ceramics are often quantified in terms the content of simple nitrides which would be required to prepare them. Some preferred nitride constituents are one or more selected from the group consisting of: silicon nitride, titanium nitride, yttrium nitride, aluminum nitride, boron nitride, beryllium nitride and tungsten nitride.

Carbon-containing ceramics are often quantified in terms the content of simple carbides which would be required to prepare them. Some preferred carbides constituents are silicon carbide, tungsten carbide, chromium carbide, vanadium carbide, niobium carbide, molybdenum carbide, tantalum carbide, titanium carbide, zirconium carbide, hafnium carbide and boron carbide.

The ceramic may comprise one or more borides. Some preferred boride constituents of the ceramic are one or more selected from the group consisting of: molybdenum boride, chromium boride, hafnium boride, zirconium boride, tantalum boride and titanium boride or titanium diboride.

Some preferred ceramic species are one or more selected from the group consisting of: sapphire, alumina, yttrium aluminium monoclinic (YAM), preferably $Y_4Al_2O_9$, yttrium aluminum garnet (YAG), preferably $Y_3Al_5O_{12}$, yttrium aluminum perovskite (YAP), preferably $YAlO_3$, cordierite, mullite, magnesium aluminate spinel, zirconia, erbium aluminum garnet (EAG), yttrium oxynitride, silicon oxynitride, and forsterite.

### Starting Materials

According to the invention, a plurality of particles in the sintering chamber can be converted into a body by application of pressure and electrical current.

The particles may have the same chemical composition as the product. The preferred chemical compositions for the product are also preferred chemical compositions for the particles.

A preferred size for the particles is in the range from 0.1 to 20 $\mu$m.

### Process conditions

The sintering of the particles proceeds under pressure. A pressure of at least 1 MPa is applied to the particles in the sintering chamber, preferably at least 5 MPa, more preferably at least 10 MPa. The pressure applied may be in the range from 15 to 30 MPa. Pressures of up to around 80 MPa or even more may be applied.

The sintering of the particles proceeds with application of an electric current. Preferably, an electric current of at least 5 kA is applied across the sintering chamber, more preferably at least 10 kA, more preferably at least 50 kA. Electrical currents of up to 100 kA or even greater can be applied.

The process is preferably performed in a non-oxidising atmosphere. The process may be performed in a vacuum, the gas pressure around the device being less than 10 mPa, preferably less than 5 mPa, more preferably less than 1 mPa. The process may be performed in an inert atmosphere, preferably argon.

### Technical applications

The ceramic body finds use in various technical applications. Some particular applications are one or more selected form the list consisting of: a plasma etcher, a plasma processing chamber (etch or deposition processes), a wear plate for a bearing or a mill liner of a grinding mill.

### Electrical Power Source

The electrical power source is preferably adapted and arrange for producing Joule heating in the plurality of particles. The electrical power source may be alternating current, pulsed direct current or continuous direct current. Continuous direct current is preferred.

### Figures

The invention is now further elucidated with the aid of the following figures.

Figure 1 is a cross sectional side-view of a device according to the invention.
Figure 2 is a cross sectional side-view of the device of figure 1 with the chamber loaded and ready for sintering.
Figure 3 shows the steps of a preparation process for the ceramic body.
Figure 4 shows a cutaway cross-section of the sinter chamber.
Figures 5a and 5b show the core test employed herein.

### Figure Descriptions

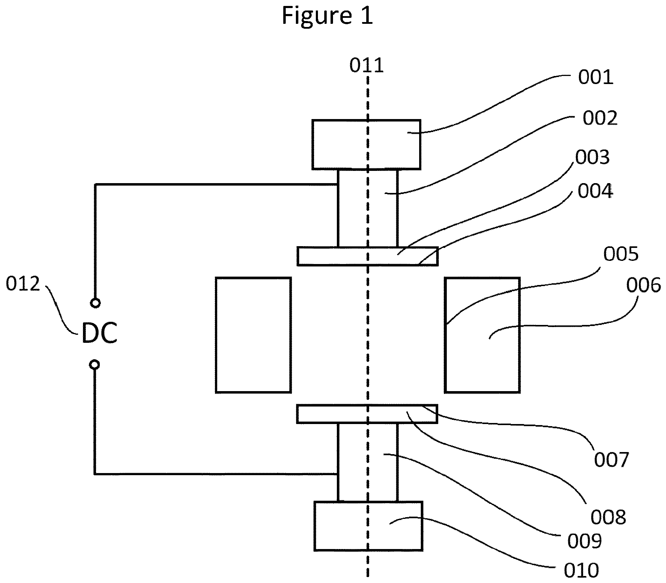

Figure 1 is a cross sectional side-view of a device according to the invention. The device has a first punch 003 having a first punch surface 004 and a second punch 008 having a second punch surface 007. The punches 003 & 008 are made of solid graphite. The punch surfaces 004 & 007 are also of graphite. The first punch 003 is positioned above the second punch 008.

The first punch 003 is oriented with the first punch surface 004 being horizontal and facing downwards. The first punch 003 can be moved in a vertical direction by a first pushing means 001 connected via a first piston 002. The second punch 008 is oriented with the second punch surface 007 horizontal and facing upwards. The second punch 008 can be moved in a vertical direction by a second pushing means 010 connected via a second piston 009. The first 004 and second 007 punch surfaces can thus be moved towards each other along the direction of a compression axis 011. The device has a die 006 shaped as a hollow graphite cylinder with an interior surface 005. The device has an electrical power source 012 adapted and arrange to supply up to 20 kA DC current and is connected to the first 003 and second 008 punches. The sintering chamber of the invention is formed as a cavity bordered by the first punch surface 004 from above, the second punch surface 007 from below, and the interior surface 005 to the sides. In this case, both punch surfaces 004 & 007 are circular and the interior surface 005 is cylindrical and the sintering chamber is thus cylindrical. The graphite layer at the interior surface 005 has not yet been positioned in figure 1.

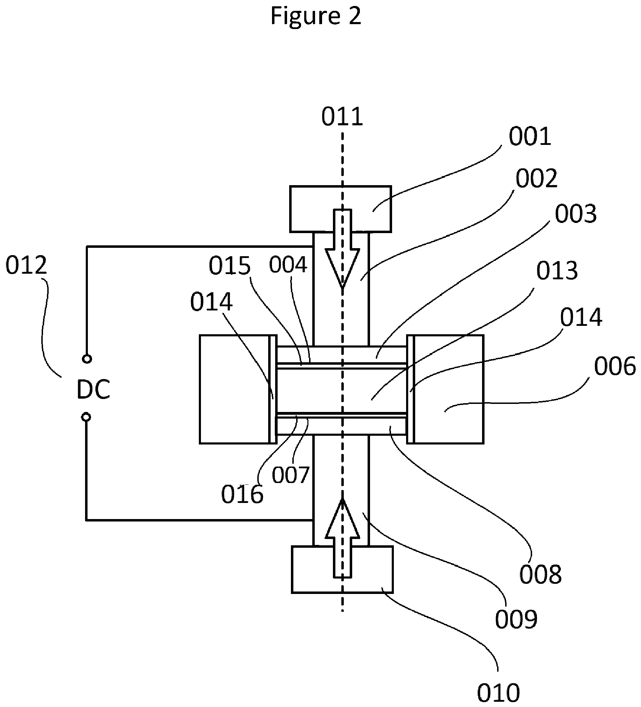

Figure 2 is a cross sectional side-view of the device of figure 1 with the sintering chamber 013 loaded and ready for sintering. The sintering chamber 013 is defined by the first punch surface 004 from above, the second punch surface 007 from below and the interior surface 005 of the die 006 to the sides. The sintering chamber 013 thus has a cylindrical shape. The sintering chamber 013 is filled with a plurality of particles for sintering. The plurality of particles may be tamped after introduction into the sintering chamber to compact it. A layer of carbon material 014 is present at the interior surface 005 of the die 006. The layer 014 in this example thus constitutes a hollow cylindrical layer. In this case, further layers 016 and 015 also of a carbon material are present at the second 007 and first 004 punch surfaces respectively. The further layers 016 and 015 are optional. In practice, the lower layer 016 and the layer 014 at the interior of the die 006 are introduced first to produce a recess into which the plurality of particles can be filled. The particles are then tamped and the optional top layer 015 is lain atop. The punch surfaces (004, 007) are then moved inwards to abut against the compacted disc of particles coated with the graphite layer. For sintering, the punch surfaces (004, 007) are moved inwards along the compression axis 011 as shown by the arrows. The punch surfaces (004, 007) apply a force to the particles thus creating a pressure in the chamber. An electrical current is applied across the sintering chamber 013 (between the first punch surface 004 and the second punch surface 007) from the electrical power source 012.

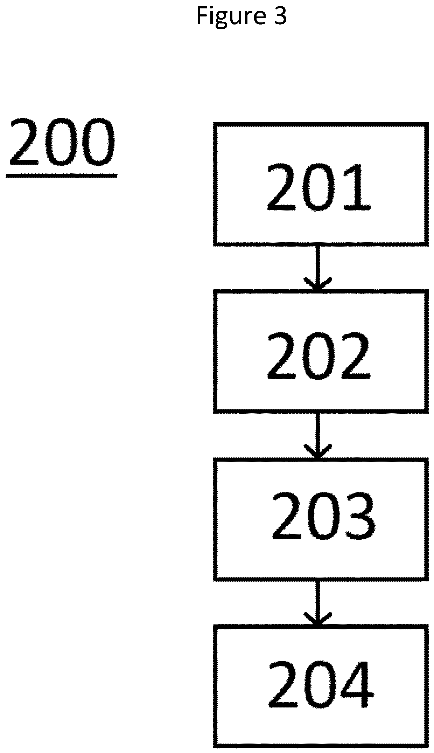

Figure 3 shows the steps of a preparation process 200 for the ceramic body. In a first step a. 201, a plurality of particles is provided. The particle size $d_{50}$ may be for example 3 $\mu$m. An example material for the particles is yttrium aluminium garnet (YAG). In a second step b. 202, a device as described in this disclosure is provided. The sintering chamber of the device may for example have a diameter of 500 mm. In a third step c. 203, the plurality of particles is introduced into the sintering chamber of the device. The graphite layer at the interior surface of the die is introduced prior to the particles. Optionally, a graphite layer at the second punch surface can also be introduced prior to the particles. The plurality of particles can be tamped to compact the particles into a cylinder. Optionally, a graphite layer for the first punch surface can be lain atop the particles before below the first punch surface. In a fourth step d. 204, a pressure of for example 50 MPa is applied to the sintering chamber and a current of for example 80 kA is passed through the chamber to convert the particles into the product ceramic body.

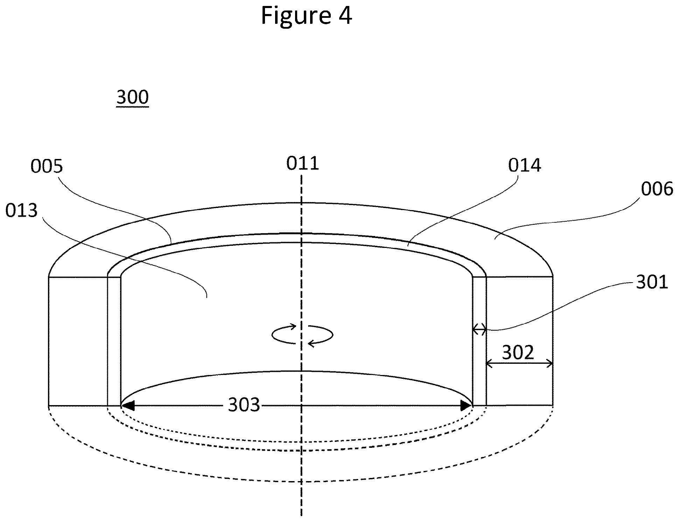

Figure 4 shows a cutaway cross-section 300 of the sintering chamber 013. The cut is vertical, along a diameter of the sintering chamber 013, passing through the compression axis 011, to show the sintering chamber 013 from the side. The die 006 is a hollow cylinder with a wall thickness 302. The graphite layer 014 is applied to the interior surface 005 of the die 006 to form a concentric hollow cylinder with a thickness 301, for example 2 mm. The die thickness 302, the layer thickness 301 and the diameter 303 of the sintering chamber 013 are each measured in a radial direction, perpendicular to the compression axis 011.

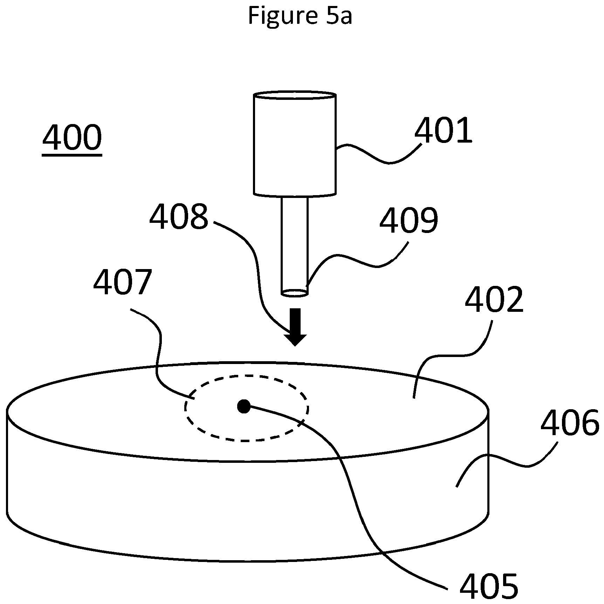

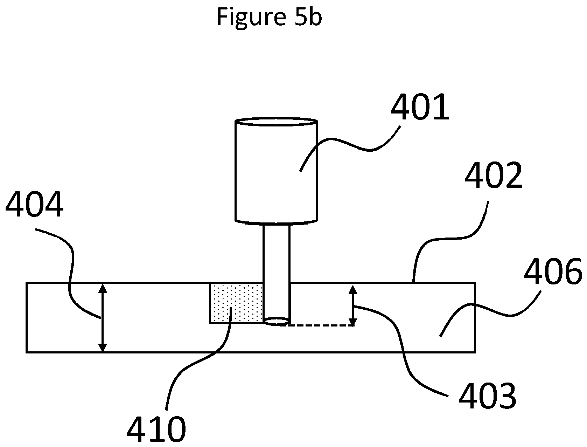

Figures 5a and 5b show the core test 400 employed herein. Figure 5a shows a perspective view prior to commencement of the test. A coring tool 401 is positioned above a first flat surface 402 of a flat-form ceramic sample 406. In this case, the flat-form ceramic sample 406 is in the form of a cylindrical disc. The tool 401 is oriented along an axis perpendicular to the first flat surface 402. The arrow 408 shows the direction of the travel of the tool 401 along the axis towards the flat-form ceramic sample 406. Once in contact with the flat-form ceramic sample 406, the coring tool 401 moves in a circular motion inside a coring region 407 that has a diameter that is larger than a diameter of a tip 409 of the coring tool 401. The circular motion is parallel to the first flat surface 402, and leads to the removal of a cylindrical region from the flat-form ceramic sample 406. Furthermore, a geometric centre 405 of the first flat surface 402 is also the geometric centre 405 of the coring region 407. Figure 5b shows a cutaway view from the side during the core test. The tool 401 has advanced a distance 403 into the flat-form ceramic sample 406, which has a sample thickness 404. Figure 5b shows that the coring tool 401 has removed a cylindrical section 410 from the flat-form ceramic sample 406. The distance 403 is determined between the first flat surface 402 and the end of the tool 401. The test finishes at the first observation of cracks in the flat-form ceramic sample 406. The success level is determined as the ratio of the distance cored 403 to the total thickness of the flat-form ceramic sample 404 at the end of the test, expressed as a percentage.

**Test Methods**

C Test

A flat-form sample ceramic having a first flat face and a thickness perpendicular to the first flat face, obtained in the examples, is cored to determine if there is excess internal stress. The coring tool 401 is a 10 mm diamond coring tool commercially available, for example from Schott Diamantwerkzeuge GmbH of Stadtoldendorf, Germany. The tool is used in commercially available CNC machines to cut a core in in the part under test. The hole formed in the part by cutting the core is from 56 mm to 60 mm, having a nominal diameter of 58 mm. The core is cut by passing the tool 401 over the surface of the part in a helical pattern to bore a hole in the part. Suitable CNC machines that can be used for this test are available, for example, from DMG Mori Company Limited of Los Angeles, California, USA, such as its Ultrasonic 60 eVo linear model. Another provider of suitable CNC machines is Fair Friend Ent. Co. Ltd. Of Taiwan, such as the Feeler HV-1650 model. The test concludes either when the core extends all the way through the sample ceramic or when the sample ceramic is observed to crack, whichever occurs first. The success score is given as the percentage of the thickness of the core cut in the sample under test. 100% success rating indicates low internal stress if any; above 75% but below 100% success rating indicates low internal stress; 25% to 75% success rating indicates corresponds to medium stress; lower than 25% success rating indicates high internal stress.

Particle size

Particle size of ceramic particles was determined using a Laser Scattering Particle Size Distribution Analyzer, Model LA-960, from Horiba Scientific of Piscataway, New Jersey in the United States.

Layer thickness

The thickness of the graphite layer may be measured by physical measurement devices, such as calipers.

Density and theoretical density

The density of the ceramic body is measured according to the standard ASTM B962 - 17. The theoretical density is calculated from x-ray diffraction (XRD) data. From the XRD data, the unit cell parameters a, b and c are obtained. Using the unit cell parameters, the unit cell volume is calculated. Based on the crystal structure of the material, the number of molecular units present in every unit cell is determined. The molecular weight of the ceramic body is known as its chemical structure is known. Using the foregoing data, the theoretical density is calculated as follows:

$$\text{Theoretical density} = (\text{Molecular weight x No. of molecules per unit cell}) / (\text{Volume of unit cell x Avogardo's number}).$$

Average grain size

The average grain size of the ceramic body is measured according to the standard ASTM E112-13 (2021).

**Examples**

The working of the invention is now further elucidated with the aid of specific examples. The invention is not limited by the features of the examples, which are intended to provide a specific concrete realisation of the invention.

**Example A**

A device is provided according to the schematic shown in figure 1. The die has a height of 1 m and the punches each have a circular punch surface of diameter 650 mm. The sintering chamber correspondingly had cylindrical shape of cross-sectional diameter 650 mm. The graphite layer on the interior surface of the die was a 1.9 mm total thickness of GRAFOIL® GTA flexible graphite available from Neograf Solutions, of Lakewood, Ohio. Neograf Solutions provides flexible graphite in sheets having thicknesses of 0.13 mm, 0.25 mm, 0.38 mm, 0.51 mm, 0.64 mm and 0.76 mm. In this example, two sheets of 0.76 mm were used, and one sheet of 0.38 mm, for a total thickness of 1.9 mm.

Commercially available yttrium oxide and aluminium oxide powders having a particle size dso of 3 µm were mixed together and 5 kg of the mixture introduced into the sintering chamber, spread to an approximately level height and compacted with a force of about 40 tons to a compacted height of 20 mm. After sintering, this powder mixture forms yttrium aluminium garnet (YAG). Next, a mixture of commercially available powders were introduced into the sintering chamber for producing zirconia toughened alumina (ZTA) when sintered, in amount of 27 kg and spread to an approximately even height of about 100 mm. Finally, a mixture of the powders for forming YAG and ZTA were introduced into the sintering chamber in an amount of 7 kg and spread to an approximately even height of about 30 mm.

The punches were moved inwards to arrive at a position as shown in figure 2. Force was applied to the powder in the sintering chamber by the first and second punches to arrive at a sintering chamber pressure of around 15 MPa. 40 to 70 kA supplied via the punches was passed through the sintering chamber for a total of 9 to 10 hours. The product was a flat form cylindrical ceramic disc with a diameter of approximately 650 mm and thickness of approximately 26 mm. The example was repeated with the following thicknesses for the graphite layer on the interior surface of the die: 0.5 mm, 1 mm, 1.3 mm, 1.5 mm, 2.5 mm, 5 mm, 10 mm and 20 mm.

While the foregoing examples were of a cylindrical ceramic disc of three layers, the method disclosed herein is also suitable for such discs of single and two layer forms.

## Example B

Examples A was repeated but with a 100 mm circular diameter for the punch surfaces.

## Example C

Examples A was repeated but with the circular diameter for the punch surfaces being 200 mm, 350 mm and 800 mm respectively.

## Results

The results of the example A are shown in table 1

Table 1

| EX # | Layer thickness [mm] | Sintering chamber diameter [mm] | Drill test success | Heating Current | Comments |
|---|---|---|---|---|---|
| 1 | 0.5 | 650 | 0% | High | Ceramic body exhibited cracks even prior to the drill test |
| 2 | 1 | 650 | 10% | High | Ceramic body shattered during drill test |
| 3 | 1.3 | 650 | 60% | Fair | Some moderate cracks appeared during drill test, but no shattering |
| 4 | 1.5 | 650 | 90% | Fair | Very minor cracks appeared during drill test |
| 5 | 1.9 | 650 | 100% | Fair | 100% success means a core was cut completely through the ceramic body with no cracking |
| 6 | 2.5 | 650 | 100% | Low | |
| 7 | 5 | 650 | NA | NA | Insufficient heating current |
| 8 | 10 | 650 | NA | NA | Insufficient heating current |
| 9 | 20 | 650 | NA | NA | Insufficient heating current |

Results of Example B are shown in Table 2

Table 2

| EX # | Layer thickness [mm] | Sintering chamber diameter [mm] | Drill test success | Heating Current | Comments |
|---|---|---|---|---|---|
| 1 | 0.5 | 100 | 100% | High | |

(continued)

| EX # | Layer thickness [mm] | Sintering chamber diameter [mm] | Drill test success | Heating Current | Comments |
|---|---|---|---|---|---|
| 2 | 1 | 100 | 100% | High | |
| 3 | 1.3 | 100 | 100% | High | |
| 4 | 1.5 | 100 | 100% | High | |
| 5 | 1.9 | 100 | 100% | High | |
| 6 | 2.5 | 100 | 100% | High | |
| 7 | 5 | 100 | NA | Insufficient Heating Current | |
| 8 | 10 | 100 | NA | Insufficient Heating Current | |
| 9 | 20 | 100 | NA | Insufficient Heating Current | |

When considering the results of Table 2, the following can be seen: when considering scaling up from producing a 100 mm ceramic body to producing a 650 mm ceramic body, there is no indication from the results of Table 2 that the layer thickness should be varied in order to produce a 650 mm ceramic body with sufficient quality.

The examples with diameter 200 mm were similar to those for diameter 100 mm, namely that 100% success was achieved across the board in the core test and the energy consumption was uniform up to and including a layer thickness of 2.5 mm. The results for diameter 350 mm were similar to those for diameter 650 mm except that the core test at 1.5 mm was 100% successful. The results for diameter 800 mm were similar to those for diameter 650 mm except that shattering was observed in the core test at 1mm thickness and the power supply was insufficient to sinter the product in the 5 and 10 mm thickness tests.

**Reference list**

| | |
|---|---|
| 001 | First Pushing Means |
| 002 | First Piston |
| 003 | First Punch |
| 004 | First Punch Surface |
| 005 | Interior Surface |
| 006 | Die |
| 007 | Second Punch Surface |
| 008 | Second Punch |
| 009 | Second Piston |
| 010 | Second Pushing Means |
| 011 | Compression Axis |
| 012 | Electrical Power Source |
| 013 | Sintering Chamber |
| 014 | Layer |
| 015, 016 | Further layers |
| 200 | Preparation process for ceramic body |
| 201 | Step a. |
| 202 | Step b. |
| 203 | Step c. |
| 204 | Step d. |
| 300 | Cross-section of sinter chamber |
| 301 | Layer thickness |
| 302 | Die thickness |
| 303 | Sinter chamber diameter |

| 400 | Core test setup |
| 401 | Coring Tool |
| 402 | First flat surface |
| 403 | Drill depth |
| 404 | Sample thickness |
| 405 | Geometric centre |
| 406 | Flat-form ceramic sample |
| 407 | Coring region |
| 408 | Direction of motion perpendicular to flat-form ceramic sample |
| 409 | Tip of coring tool |
| 410 | Cylindrical section removed from flat-form ceramic sample |

**Claims**

1. A device having a sintering chamber (013), the sintering chamber (013) being bordered by the following device parts:

    i. a first punch surface (004) of a first punch (003);
    ii. a second punch surface (007) of a second punch (008); and
    iii. an interior surface (005) of a die (006);

    wherein:

    the punches (003, 008) are adapted and arranged to apply a pressure of at least 1 MPa along a compression axis (011) to a target in the sintering chamber (013);
    the first punch (003) and the second punch (008) are connected to an electrical power source (012) adapted and arranged to provide a current of at least 5 kA;
    the first and second punches (003, 008) comprise at least 50 wt. % carbon, based on the total weight of the punch (003, 008);
    the sintering chamber (013) has a cross-sectional width W perpendicular to the compression axis (011) of at least 300 mm;

    wherein a layer $\delta$ of a carbon material $C_\delta$ is present at at least part of the interior surface (005) of the die (006), the layer $\delta$ having a mean thickness $D_\delta$ determined over the interior surface (005) of the die (006), wherein $D_\delta$ is in the range from 1.1 to 8 mm.

2. The device according to claim 1, wherein the layer $\delta$ has a standard deviation of thickness $D_\delta$ in the range from 0.01 to 0.08 mm determined over the interior surface (005) of the die (006).

3. The device according to claim 1 or 2, wherein the layer $\delta$ is made up of 2 or more stacked sub-layers.

4. The device according to any of the preceding claims, wherein both punches (003, 008) and the die (006) are at least partially present in a vacuum chamber or in a non-oxidising atmosphere or both.

5. The device according to any of the preceding claims, wherein the sintering chamber (013) has a diameter $D_C$ and the ratio $D_C:D_\delta$ of the diameter $D_C$ and the mean thickness of the layer $D_\delta$ is in the range from 100:1 to 350:1.

6. The device according to any of the preceding claims, wherein one or both of the following are satisfied:

    a. a layer $\varepsilon$ of a carbon material $C_\varepsilon$ is present at at least part of the first punch surface (004);
    b. a layer $\theta$ of a carbon material $C_\theta$ is present at at least part of the second punch surface (007).

7. The device according to any of the preceding claims, wherein one or more of the following are satisfied:

    a. The first punch (003) is at least 99% wt. % carbon, based on the total weight of carbon atoms in any chemical form and the total weight of the first punch (003);
    b. the second punch (008) is at least 99% wt. % carbon, based on the total weight of carbon atoms in any chemical form and the total weight of the second punch (008);

c. The die (006) is at least 99% wt. % carbon, based on the total weight of carbon atoms in any chemical form and the total weight of the die (006);

d. The layer $\delta$ is at least 99% wt. % carbon, based on the total weight of carbon atoms in any chemical form and the total weight of the layer $\delta$.

8. The device according to any of the preceding claims, wherein the die is of a carbon material $C_\gamma$ and one or more of the following are satisfied:

   a. $C_\delta$ and $C_\gamma$ have a different anisotropy value,

   b. $C_\delta$ and $C_\gamma$ have a different specific conductivity, determined in a direction parallel to the compression axis (011),

   c. $C_\delta$ and $C_\gamma$ have a different specific conductivity, determined in a direction perpendicular to the interior surface (005).

   d. $C_\delta$ and $C_\gamma$ have a different specific thermal expansivity, determined in a direction parallel to the compression axis (011),

   e. $C_\delta$ and $C_\gamma$ have a different specific thermal expansivity, determined in a direction perpendicular to the interior surface (005),

   f. The first carbon material and the second carbon material have a different ash content as determined by ASTM C-561].

9. A process for the preparation of a ceramic body, comprising the steps:

   a. providing a plurality of particles;

   b. providing a device according to any of the preceding claims;

   c. introducing the particles into the sintering chamber (013) of the device;

   d. applying a pressure P in the range from 1 MPa to 80 MPa and an electrical current I in the range from 1 kA to 100 kA to obtain the ceramic body.

10. The process according to claim 9, wherein the particles contain at least 30 wt. % yttrium in any chemical form, based on the total mass of yttrium atoms and the total mass of the particles.

11. A ceramic body obtainable by a process according to claim 9 or 10.

12. The ceramic body according to claim 11, wherein at least one or all of the following are satisfied:

   a. A value for density divided by theoretical density that is less than 1.0;

   b. An average grain size of less than 5 $\mu$m;

   c. A standard deviation for the average grain size distribution that is in the range of $1.8 \pm 2$ $\mu$m to $2.2 \pm 2$ $\mu$m.

13. An assembly comprising a ceramic body according to claim 11 or 12.

14. The assembly according to claim 13, the assembly being selected from the group consisting of:

   a. A plasma etcher,

   b. Plasma processing chamber (etch or deposition processes),

   c. A wear plate for a bearing,

   d. A mill liner of a grinding mill.

15. A use of a graphite layer of thickness in the range from 1.1 to 8 mm for preparing a ceramic body having an extension of at least 300 mm by spark plasma sintering.

## Figure 1

# Figure 2

Figure 3

<u>200</u>

```
┌─────────────┐
│     201     │
└─────────────┘
       │
       ▼
┌─────────────┐
│     202     │
└─────────────┘
       │
       ▼
┌─────────────┐
│     203     │
└─────────────┘
       │
       ▼
┌─────────────┐
│     204     │
└─────────────┘
```

# Figure 4

<u>300</u>

Figure 5a

Figure 5b

Europäisches
Patentamt

European
Patent Office

Office européen
des brevets

# EUROPEAN SEARCH REPORT

Application Number

**EP 22 20 4700**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/072703 A1 (HERAEUS CONAMIC NORTH AMERICA LLC [US]) 7 April 2022 (2022-04-07) * figures 1-2 * * paragraphs [0071] – [0090], [0114], [0164], [0177] * ----- | 1-5,7-15 | INV. B28B3/02 B28B3/08 C04B35/645 B28B11/24 B30B11/04 B30B15/34 B22F3/105 |
| X | WO 2015/185969 A1 (CONSEJO SUPERIOR INVESTIGACION [ES]; UNIV SEVILLA [ES]) 10 December 2015 (2015-12-10) * figures 1,3a * * claims 1-8 * ----- | 1-6, 11-13,15 | |

TECHNICAL FIELDS
SEARCHED (IPC)

B28B
C04B
B30B
C22C
B22F

The present search report has been drawn up for all claims

| Place of search | Date of completion of the search | Examiner |
|---|---|---|
| The Hague | 23 March 2023 | Voltz, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 4700

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2023

| Patent document cited in search report | | Publication date | Patent family member(s) | | Publication date |
|---|---|---|---|---|---|
| WO 2022072703 | A1 | 07-04-2022 | TW  202222740 | A | 16-06-2022 |
| | | | WO  2022072703 | A1 | 07-04-2022 |
| WO 2015185969 | A1 | 10-12-2015 | ES  2551980 | A2 | 24-11-2015 |
| | | | WO  2015185969 | A1 | 10-12-2015 |

**EP 4 360 837 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EUGENE A. OLEVSKY et al.** Fundamental Aspects of Spark Plasma Sintering: I. Experimental Analysis of Scalability. *J. Am. Ceram. Soc.,* 2012, vol. 95 (8), 2406-2413

- Fundamental Aspects of Spark Plasma Sintering: II. Experimental Analysis of Scalability. *J. Am. Ceram. Soc.,* 2012, vol. 95 (8), 2414-2422